# EUROPEAN PATENT APPLICATION

(11) **EP 2 211 278 A1**
(43) Date of publication of application: **28.07.2010**
(21) Application number: 10150192.2
(22) Date of filing: 06.01.2010
(51) Int. Cl.: G06F 17/30

(54) **Image search enhanced vehicle telemaintenance**

(30) Priority: 15.01.2009 US 354311
(71) Applicant: Honeywell International Inc., Morristown, NJ 07962 (US)
(72) Inventor: Wright, George L., Morristown, NJ 07962-2245 (US); Wright, Mark A., Morristown, NJ 07962-2245 (US); Saugen, Jill, Morristown, NJ 07962-2245 (US)
(74) Representative: Buckley, Guy Julian

(57) **Abstract**

A device and methods are provided for identifying mechanical components in a machine, such as a vehicle. One or more images of the mechanical components are captured, perhaps using a telemaintenance device (TMD). The images are transmitted as part of a query to a telemaintenance database (TDB). The TDB processes the query, including the images, to determine information about the images. Part of the processing may include an image search of the images in the query. The information about the images is then transmitted in a query response. The TMD or other device receives the response and displays part or all of the response. The query may be part of a repair session involving one or more procedures to perform repairs on the machine.

## Description

### TECHNICAL FIELD

This disclosure relates to the field of mechanical maintenance. More particularly, this disclosure relates to maintenance and repair of complex machines, including vehicles, using images of mechanical components.

### BACKGROUND

The maintenance and repair of complex machinery, such as motor vehicles, often requires the identification of mechanical components or parts. As used herein, "mechanical components" are any components or parts of a machine including but not limited to mechanical, electrical, electronic, industrial, computer hardware and/or software, decorative components, housings/bodies of the machine, tubing, wooden parts, composite components, and the like, including the entire machine.

For example, to repair a coolant leak in a motor vehicle, a mechanic may have to identify various parts - such as pumps, hoses, gaskets, and cylinders - that make up the coolant system in the motor vehicle. If one or more of the parts needs replacement, the mechanic typically identifies the part by name and/or part number. Then, once identified, a replacement part can be ordered to complete the repair. During and after the repair, information about the replaced parts is typically recorded, such as in a maintenance log and/or in a billing system.

However, in some circumstances, it may be difficult to identify a part. For example, if a person who is not a trained mechanic is trying to repair a machine, the person may not be able to identify the components of the machine. In addition, even if the person knows the components of the machine, the part number and/or other identifying information for the components may not be readily available, such as when a trained mechanic is in a remote location.

### SUMMARY

A first embodiment of the disclosure provides a device. The device includes an image-capture device, a processor, and data storage. The data storage stores machine language instructions that are executable by the processor to perform functions. The functions include: (a) capturing one or more images of one or more mechanical components using the image-capture device, (b) sending a query including the one or more images and a repair operation, (c) receiving a response to the query, and (d) displaying at least part of the response.

A second embodiment of the disclosure provides a method. One or more images of one or more mechanical components of a vehicle are captured. The one or more images are captured using a telemaintenance device (TMD). A query is transmitted. The query includes the one or more images and a repair operation. A response is received to the query. At least part of the response is displayed by the TMD.

A third embodiment of the disclosure provides a method. A query is received at a telemaintenance database. The query includes one or more input images of mechanical components. A query result is determined that is based on the one or more input images. A response is sent that is based on the query result.

### BRIEF DESCRIPTION OF THE DRAWINGS

Various examples of embodiments are described herein with reference to the following drawings, wherein like numerals denote like entities, in which:
Figure 1 shows an example part identification scenario, in accordance with embodiments of the disclosure;
Figure 2 shows an example repair session scenario, in accordance with embodiments of the disclosure;
Figure 3 is an example imaged-repair record, in accordance with embodiments of the disclosure;
Figure 4 is a block diagram of an example computing device, in accordance with embodiments of the disclosure;
Figure 5 is a flowchart depicting an example method, in accordance with an embodiment of the disclosure; and
Figure 6 is a flowchart depicting another example method, in accordance with an embodiment of the disclosure.

### DETAILED DESCRIPTION

A telemaintenance device (TMD) that can transmit data, such as images, video, voice, binary, and other types of data, may aid component identification when acting in concert with a telemaintenance database (TDB), perhaps at a telemaintenance center (TMC). The TMD may be any device that can transmit data to the telemaintenance database and/or telemaintenance center, including but not limited to desktop computers, mobile computers, laptop computers, wireless telephones, and personal digital assistants. The TMD may have a scanner as well, such as a Radio Frequency Identification (RFID) scanner, image scanner, and/or bar code scanner, for scanning mechanical-component information of components to be identified. For example, if a mechanical component has a bar code identifying a part identifier (part ID); the scanner may read the bar code and thus determine the part ID of the mechanical component.

Preferably, the TMD is a mobile computer with an image capture device and scanner, such as the Dolphin 7900 Mobile Computer from Honeywell International Inc. of Morristown, New Jersey. The TMD may also include the functionality of a convoy planning tool and/or a vehicle deployment planning system, described in U.S. Patent Application Number 11/955,198 (U.S. Patent Application Publication No. 2009/0157461) entitled "Vehicle Deployment Planning System," and filed on December 12, 2007.

The TMD may transmit data in the form of a query to the telemaintenance database and/or telemaintenance center. The query may include information used to identify a component, such as image(s) of mechanical component(s) and mechanical-component information. The query may also include information about maintenance or repair procedure being performed, such as a current operation within the maintenance/repair procedure. The query may be sent over wired and/or wireless network(s), such as but not limited to the Internet, a local area network, a wide area network, and/or other public and private data networks.

The telemaintenance database may process the query using a non-word or non-number search, such as an image search that allows for the matching of images. For example, the telemaintenance database may perform an image search on input image(s) of mechanical component(s) in the query. If the image search finds a matching image to the input image(s), the telemaintenance database may retrieve stored information about the matching image, such as part number, cost, and ordering information. Then, the telemaintenance database may send a query result with the matching image and/or the information about the matching image from the telemaintenance database. Image searches, non-word searches, and non-number searches are described in more detail in U.S. Patent App. No. 11/928,911 U.S. Patent Application Publication No. 2009/0112861), entitled "Non-Word or Non-Number Search" and filed on October 30, 2007. To aid the image search, the telemaintenance database may include a graphical processor to process the images to aid searching. Also or instead, the image search may be human assisted.

The information about the matching image may include repair information as well. For example, suppose repair personnel are trying to replace a head gasket in a vehicle. The repair personnel may establish a "repair session" with the telemaintenance center and/or telemaintenance database. During a repair session, one or more operations are performed on a machine, perhaps in a specified sequence. While performing the operations, the repair personnel may take images of vehicle components and be prompted to send them to the telemaintenance center and/or telemaintenance database. Then, an image search may be performed to compare the image shown to an expected image to verify that each step in the repair of the head gasket is performed correctly and that the right components are used during the repair. The verification of each step in the repair may be performed by looking up data in the telemaintenance database and/or by inspection by the human personnel at the telemaintenance center.

Upon verifying a repair step is performed correctly, the repair personnel may be prompted to perform the next step in the repair (*e.g.*, remove the faulty head gasket), take a new image of the repair using the TMD, and/or send a query with the new repair image to the telemaintenance center and/or telemaintenance database. The repair personnel may contact the telemaintenance center using the TMD for assistance with the repair.

The repair session may be recorded in a repair record. For example, the operations performed during the repair process (*e.g.*, remove hoses, drain oil, replace head gasket) may be listed on the repair record. Images taken during the repair process may be included in the repair record as well. The repair record may also contain billing and other information.

The repair record and/or repair session may be used to train repair personnel as well. For example, the telemaintenance database and/or telemaintenance center personnel may be able to review work of repair personnel learning a new repair procedure and provide a grade or other feedback based on the images taken during a repair session.

The repair session may or may not include an "interactive session." The interactive session may involve communication between personnel attempting to perform operations on a machine and advisory personnel, such as subject matter experts about the machine located at a telemaintenance center. The interactive session may involve communication of audio, visual, and/or binary data used to guide and/or record performance of operations on the machine. The interactive session may be part of a repair session or vice versa.

The telemaintenance database may also be part of the convoy planning tool and/or the vehicle deployment planning system as described in U.S. Patent App. No. 11/955,198. For example, suppose a convoy of vehicles is traveling in a remote area where the convoy is equipped with a convoy planning tool that includes the functionality of the TMD and the telemaintenance database as described above. A mechanic or other person deployed with the convoy can use the convoy planning tool to capture images and/or scan mechanical components, query the telemaintenance database, perform any necessary repairs on the vehicles using information (*e.g.*, component information or repair procedures) in telemaintenance-database-query results and/or with guidance from the telemaintenance center, and include imaged-repair records in the maintenance logs for any repaired vehicles. In addition, the mechanic deployed with the convoy may construct queries to search for mechanical components required for the necessary repairs that are carried with the convoy and/or near the convoy.

The use of the TMD and the telemaintenance database may permit untrained persons to identify mechanical components and perform repairs. Further, the TMD and the telemaintenance database may provide additional, useful information to repair personnel during a repair session, including being used to train new repair personnel. In addition, the images taken during a repair session may be provided to a repair customer and/or stored in vehicle maintenance logs to provide detailed information about repairs performed on a vehicle. When combined with a convoy planning tool, the functionality of the TMD and/or the telemaintenance database may permit convoys to continue to operate even when vehicle repairs are needed in remote locations.

### An Example Part Identification Scenario

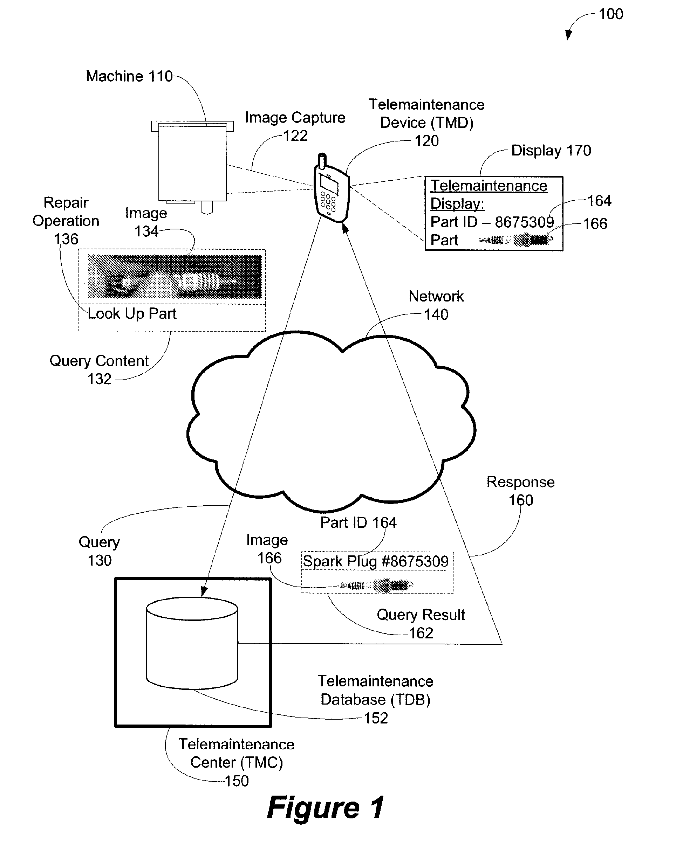

Turning to the figures, Figure 1 shows an example part identification scenario 100, in accordance with embodiments of the disclosure. In scenario 100, one or more components of machine 110 are being scanned by telemaintenance device (TMD) 120 as part of image capture 122. The TMD 120 captures an image 134 of a mechanical component of machine 110.

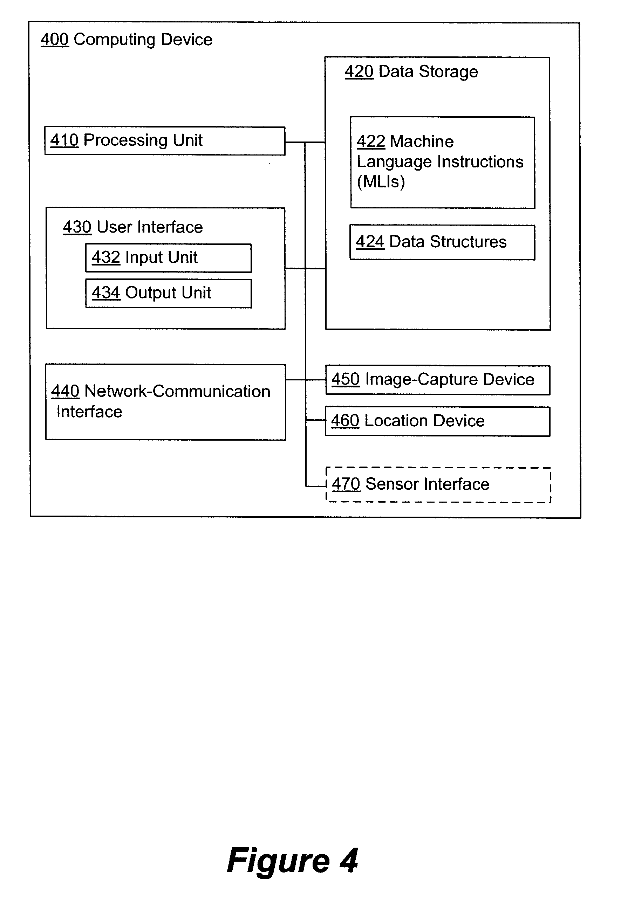

In scenario 100, a user of TMD 120 requires part information about the mechanical component. To gain the part information, a query 130, which includes query content 132, is sent from the TMD 120 to a telemaintenance database (TDB) 152 via the network 140. As shown in Figure 1, the query content 132 includes the image 134 and a repair operation 136 of "Look Up Part." The network 140 may be one or more public and/or private data networks accessible via a network-communication interface 440 described below in more detail with respect to Figure 4. For example, the network 140 may be the Internet, one or more Local Area Networks (LANs), and/or one or more Wide Area Networks (WANs), may involve secure and/or unsecured communications, and may utilize wired and/or wireless technology.

The query 130 may include "query limitations." Query limitations may be used to restrict the type and/or amount of data returned in response to the query. For example, the query content 132 may also include information about a location of the machine 110. The query 130 may include an instruction to locate mechanical components, with the query limitation that the mechanical components are at or near the location of the machine 110. For example, suppose the user of TMD 120 needed to locate a mechanical component to repair machine 110. Further, suppose the machine 110 is located in a remote location or in a location unfamiliar to the user of TMD 120. Then the query may include an instruction to locate the needed mechanical component within a short distance (*e.g.*, within a kilometer) of the location of the vehicle 110. The short distance may be specified as an additional query limitation to query 130 or the same limitation to limits components to those at or near the location of machine 110.

The query 130 may be processed by the TDB 152. As part of query processing, an image search of the image 134 in the query content 132 may be performed. If the image search finds information related to the image 134, the TDB 152 may return some or all of the found information in a response 160. As shown in Figure 1, the response 160 includes a query result 162 with found information such as the requested part ID 164. The query result 162 may also include a found image 166 that is a closest match to image 134. The response 160 may be sent via network 140 to the TMD 120. TMD 120 may then display part or all of the response 160. For example, Figure 1 shows the TMD 120 displaying a display 170 including part ID 164 and the image 166 of the query content 162. Query processing may include processing any specified query limitations, such as only returning images of parts that can be found at or near the location of the machine 110.

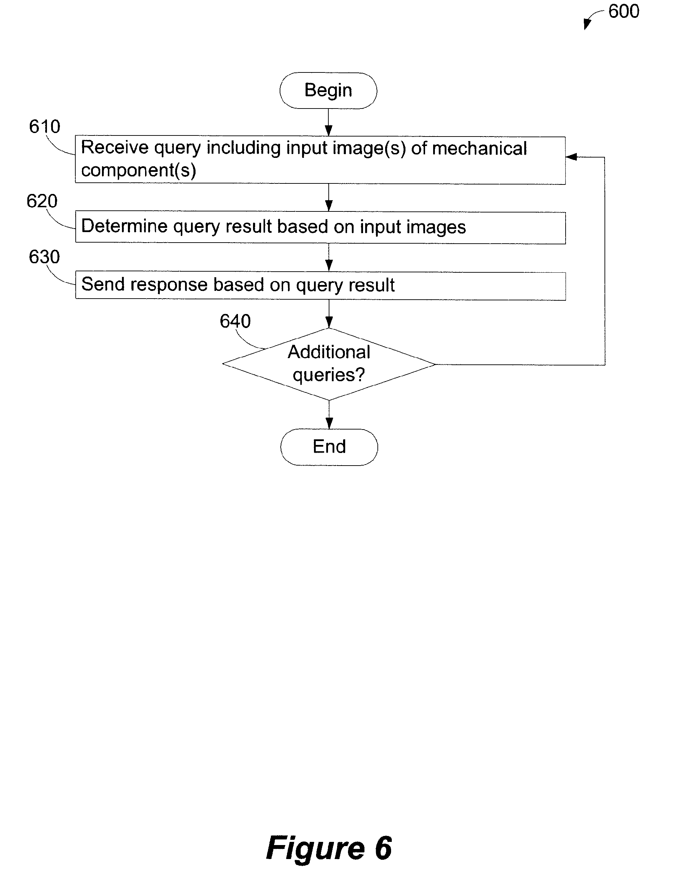

The TDB 152 may be located in a telemaintenance center 150. The telemaintenance center 150 may have personnel, such as subject matter experts, available to assist users querying the telemaintenance database 150. Personnel at the telemaintenance center 150 may aid users in proper use and installation of mechanical components, such as but not limited to identifying images and perhaps responsively adding additional information to the query 130, aiding users with information about ordering, installing, removing, and/or using queried mechanical components, and/or helping users capture images that can more readily be queried by the TDB 152. Also or instead, the TDB 152 may use a graphical processor to process the image 134 before an image search. The graphical processor is described below in more detail with respect to block 610 and method 600 of Figure 6.

### Example Repair Session Scenario

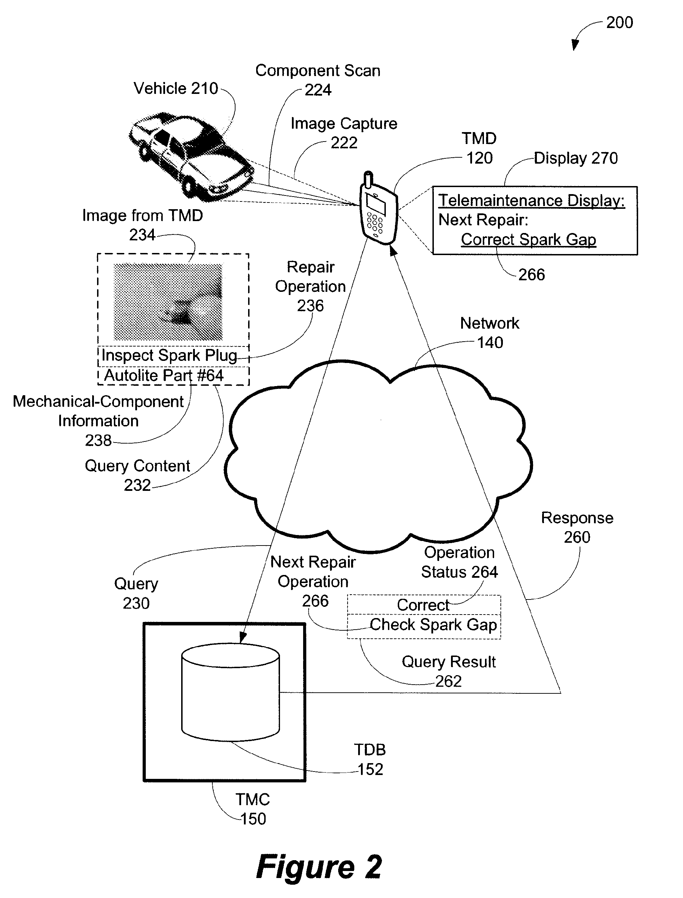

Figure 2 shows an example repair session scenario 200, in accordance with embodiments of the disclosure. In the scenario 200, the repair session involves replacing one or more spark plugs in vehicle 210. As one of the operations of the repair session, a spark plug is inspected, as shown in image 234 captured with TMD 120 as described above with respect to Figure 1.

As part of the repair session, the user of TMD 120 sends query 230 including query content 232 to TDB 152 via the network 140. The query content 232 includes the image 234, a repair operation 236, and mechanical-component information 238. The repair operation 236 may indicate the operation being performed during the repair session, such as "Inspect Spark Plug." The mechanical-component information 238 may include information found during the repair operation, such as but not limited to part ID information like "Autolite Part #64," sensory information (*e.g.*, the feel, smell, and/or sound of the part), and timing information. Many other types of mechanical-component information are possible as well.

Once the TDB 152 receives the query 230, query processing, including an image search on image 234, may take place as indicated above with respect to query 130 shown in Figure 1. As part of the query processing, a next repair operation 266 may be determined that indicates the next operation repair personnel operating on the vehicle 210 should perform. In addition, the query processing of query 230 may determine an operation status 264 of the repair operation 236, such as by determining if the repair operation 236 was performed correctly or incorrectly. The operation status 264 and the next repair operation 266 may be included in a query result 262 of response 260 to the query 230. The response 260 may be sent from the TDB 152 via network 140 to TMD 120 as described above with respect to response 160 in Figure 1. The information in the response 260 may be displayed by TMD 120 in a display 270. The display 270 shows the next repair operation 266. The operation status 264 may be shown by display 270 implicitly as in Figure 2, or explicitly (*e.g.*, "Operation Status - Correct"). In an example not shown in Figure 2, an incorrect operation status 264 may be shown implicitly by indicating the repair operation 236 is to be performed again.

### An Example Imaged-Repair Record

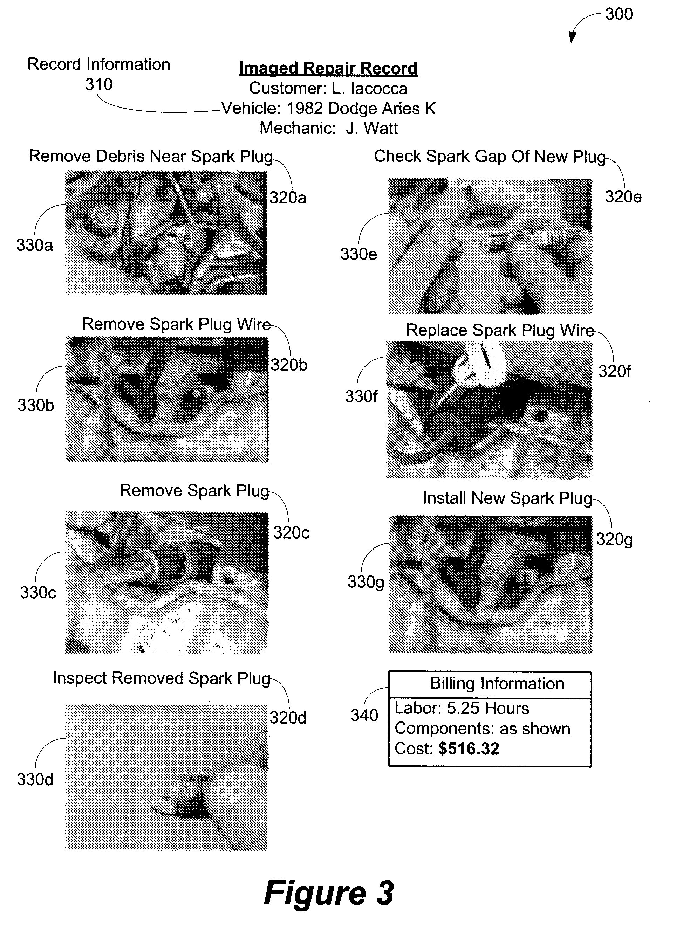

Figure 3 is an example imaged-repair record 300, in accordance with embodiments of the disclosure. As shown in Figure 3, the example imaged-repair record 300 shows information about a repair session where a spark plug was removed; that is, the imaged-repair record 300 may be an example record of the entirety of the example repair session described above with respect to Figure 2. The imaged-repair record 300 may include record information 310. As shown in Figure 3, the record information 310 may include a customer name, a machine or vehicle type that was repaired, repair personnel name or ID. Many other types of record information 310 could be part of imaged-repair record 300 as well.

The imaged-repair record 300 shows the repair session involved seven repair operations 320a-320g and an image 330a-330g taken during each corresponding repair operation 320a-320g. Each image 330a-330g may be taken after performing each repair operation, as described above with respect to Figure 2. In that case, the imaged-repair record 300 may be generated, perhaps by the TDB 152 and/or TMD 120, by (a) storing images sent in queries to the telemaintenance database during the repair session with respect to specific repair operations and (b) generating the imaged-repair record 300 including the stored images and information about the operations performed during the repair session. More or fewer repair operations and/or images may be included in imaged-repair record 300. Preferably, imaged-repair record 300 includes at least one image taken during a repair session.

The imaged-repair record 300 may include billing information 340. The billing information 340 may include labor information, components used during the repair session, and a cost of the repair session. Many other types of information may be included as billing information 340 as well.

The imaged-repair record 300 may inform the customer about the operations performed during the repair session, act as proof that repairs were performed to the vehicle, and aid verification of the correctness of the repairs. The imaged-repair record 300 may be used to evaluate performance of repair personnel and provide information/examples for training new repair personnel.

### An Example Computing Device

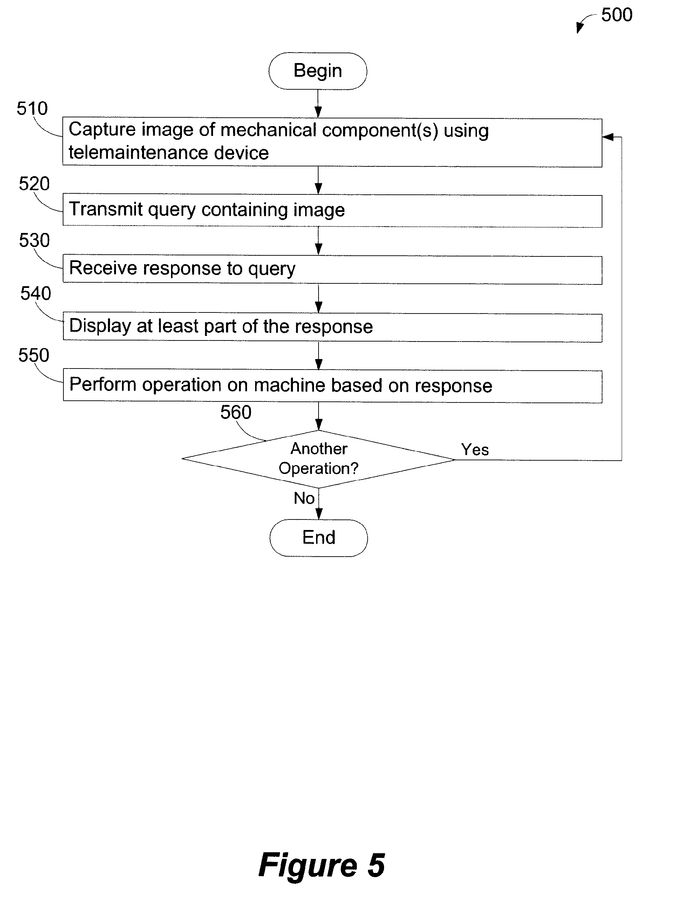

Figure 4 is a block diagram of an example computing device 400, comprising a processing unit 410, data storage 420, a user interface 430, a network-communication interface 440, an image-capture device 450, and a location device 460, in accordance with embodiments of the disclosure. Optionally, the computing device 400 may include a sensor interface 470. Computing device 400 may be a desktop computer, laptop or notebook computer, personal data assistant (PDA), mobile phone, embedded processor, or any similar device that is equipped with a processing unit capable of executing machine-language instructions that implement at least part of the herein-described method 500 of Figure 5, method 600 of Figure 6, and/or herein-described functionality of a TMD 200, a graphical processor, a telemaintenance database, and/or a telemaintenance center.

The processing unit 410 may include one or more central processing units, computer processors, mobile processors, digital signal processors (DSPs), application-specific integrated circuits (ASICs), graphics processing units (GPUs), microprocessors, computer chips, integrated circuits, and similar processing units now known and later developed and may execute machine-language instructions and process data.

The data storage 420 may comprise one or more storage devices. The data storage 420 may include read-only memory (ROM), random access memory (RAM), removable-disk-drive memory, hard-disk memory, magnetic-tape memory, flash memory, and similar storage devices now known and later developed. The data storage 420 comprises at least enough storage capacity to contain machine-language instructions 422 and data structures 424.

The machine-language instructions 422 and the data structures 424 contained in the data storage 420 include instructions executable by the processing unit 410 and any storage required, respectively, to perform some or all of the herein-described functions of a TMD, a graphical processor, a telemaintenance database, and/or a telemaintenance center, and/or to perform some or all of the procedures described in method 500 and/or method 600. In particular, the data structures 424 may comprise a one or more herein-described telemaintenance records and/or repair records.

The machine-language instructions 422 also may include instructions executable by the processing unit 410 to perform part or all of the functionality of the convoy planning tool and/or the vehicle deployment planning system described in U.S. Patent Application Number 11/955,198 and/or the functionality required to perform non-word, non-number, and/or image searches as described in U.S. Patent Application Number 11/928,911.

The user interface 430 may comprise an input unit 432 and/or an output unit 434. The input unit 432 may receive user input from a user of the computing device 400. The input unit 432 may comprise a keyboard, a keypad, a touch screen, a computer mouse, a track ball, a joystick, and/or other similar devices, now known or later developed, capable of receiving user input from a user of the computing device 400.

The output unit 434 may provide output to a user of the computing device 400. The output unit 434 may comprise a visible output device, such as one or more cathode ray tubes (CRT), liquid crystal displays (LCD), light emitting diodes (LEDs), displays using digital light processing (DLP) technology, printers, light bulbs, and/or other similar devices, now known or later developed, capable of displaying graphical, textual, and/or numerical information to a user of computing device 400. The output unit 434 may alternately or additionally comprise one or more aural output devices, such as a speaker, speaker jack, audio output port, audio output device, earphones, and/or other similar devices, now known or later developed, capable of conveying sound and/or audible information to a user of computing device 400.

The network-communication interface 440 may be configured to send and receive data over a wired-communication interface and/or a wireless-communication interface. The wired-communication interface, if present, may comprise a wire, cable, fiber-optic link or similar physical connection to a data network, such as a wide area network (WAN), a local area network (LAN), one or more public data networks, such as the Internet, one or more private data networks, or any combination of such networks. The wireless-communication interface, if present, may utilize an air interface, such as a ZigBee, Wi-Fi, and/or WiMAX interface to a data network, such as a WAN, a LAN, one or more public data networks (*e.g.*, the Internet), one or more private data networks, or any combination of public and private data networks. The network-communication interface 440 may enable secure communications, perhaps by the use of communication-security techniques such as, but not limited to, Secure Sockets Layer (SSL), Transport Layer Security (TLS), Secure Shell (SSH), Virtual Private Network (VPN), IP Security (IPSec), Trusted Computer System Evaluation Criteria (TCSEC)/Orange Book techniques, ISO/IEC 15443, 15408 and/or 17799 techniques, public/private key techniques such as the RSA algorithm, and/or other cryptographic algorithms.

The network-communication interface 440 may permit *en route* communications with one or more vehicles, perhaps traveling in a convoy. An exemplary method for providing *en route* communications is by use of a configuration aware packet routing method. U.S. Patent Application No. 11/613,749 entitled "Voice-Over-Internet Protocol Intra-Vehicle Communications," filed on December 20, 2006 and published as U.S. Patent Application Publication Number 2008/0151793 on June 26, 2008, U. S. Patent Application No. 11/613,700 entitled "Distance Adaptive Route Protocol" filed on December 20, 2006 and published as U.S. Patent Application Publication Number 2008/0151889 on June 26, 2008, and U.S. Patent Application No. 11/613,730 entitled "Configuration Aware Packet Routing in an Ad-Hoc Network," filed on December 20, 2006 and published as U.S. Patent Application Publication Number 2008/0151841 on June 26, 2008, describe exemplary configuration aware packet routing methods. The network-communication interface 440 may connect to a data network via other *en route* communications methods, such as a connecting to a network device using a wireless WAN (*e.g.*, CDMA, TDMA, GSM, 3G, etc.), Wi-Fi, and/or WiMAX protocol.

The image-capture device 450 may be configured to capture images generally, and/or of mechanical components particularly. The image-capture device 450 may be a camera, such as a digital camera. Preferably, the camera is configurable to capture color and/or black-and-white images. The image-capture device 450 may have data storage for storing captured image(s) that is separate from data storage 420. The image-capture device 450 may include a scanner suitable for reading encoded data generally and for reading encoded data about mechanical components specifically, such as data stored as a bar code or on a RFID chip. The image-capture device may have data storage for storing encoded (*e.g.,* a bar code) and/or decoded data (*e.g.*, the values stored on a bar code) separate from data storage 420. The computing device 400 may be configured to transmit the images captured in the image-capture device 450, perhaps via the network-communication interface 440.

The images may be stored in any suitable image file format, such as but not limited to the Joint Photographic Experts Group (JPEG) format, tapped image file format (TIFF), RAW image format, graphic interchange format (GIF), Bitmap, and/or red green blue (RGB) format (among others) for still images. The images may be stored in a video format perhaps using a video codec, such as MPEG-1, MPEG-2, MPEG-4 (Part 2 and/or Part 10) H.261, H.263, H.264, x264, VP6, VP7, Sorenson 3, Windows Media Video and/or RealVideo. Specific images may be identified in the query - for example, if a video clip is part of the query, the images may be identified numerically within the video clip (*e.g.*, images 1 and 32 of the clip), with respect to time (*e.g.*, the images shown at 3 seconds and 3.42 seconds into the clip) and/or as numerical or time ranges. Many image file formats and/or video formats are possible as well.

The location device 460 may provide information about a current position of the computing device 400. The location device 460 may be within the same housing as the other components of the computing device 400 or may be a separate device connected to the computing device 460, perhaps using a wired or wireless technology, such as, but not limited to, ZigBee, WiMAX, Wi-Fi, Bluetooth, wires, cables, RS-232, Ethernet, universal serial bus (USB), Personal Computer Memory Card International Association (PCMCIA)/PC Card, Express Card, or similar connection technology. These connection technologies may connect to separate devices acting as components (*e.g.*, a keyboard of the input unit 432) of the computing device 400 as well.

The location device 460 may display a map of a current location to be displayed, either as part of the location device 460 or by utilizing a display of output unit 434. The map may be stored as one or more files or other data objects in the location device. The map may be retrieved also or instead from a data network via network-communication device 440, such as maps stored on the Internet (*e.g.*, Google Earth Maps, street maps provided by MapQuest or Google, and satellite images)

The location device 460 may utilize one or more technologies and techniques to determine the current position, including but not limited to Global Positioning System (GPS), gyroscopes, dead reckoning techniques, magnetic devices such as compasses, landmark comparison processes, lasers (including range finders and ring gyroscopes), and/or radio-frequency waves. Other techniques and technologies for determining the current position of the location device are possible as well. The location device 460 may report the determined current position to the processing unit 410 and/or store the current position in the data storage 420.

The sensor interface 470 may be an interface for and/or include sensors as well. Example sensors include, but are not limited to, tactile sensors (*e.g.*, tactors), audio sensors (*e.g.*, microphones) meteorological sensors (*e.g.*, air temperature, humidity, wind speed, barometers), chemical, biological, radiation and nuclear (CBRN) related sensors, material scanning components (*e.g.*, X-ray devices or similar scanners), and sensors for specific purposes (*e.g.*, sensors to detect fuel leaks or explosives).

### An Example Method for Performing an Operation on a Machine

Figure 5 is a flowchart depicting an example method 500, in accordance with an embodiment of the disclosure. It should be understood that each block in this flowchart and within other flowcharts presented herein may represent a module, segment, or portion of computer program code, which includes one or more executable instructions for implementing specific logical functions or steps in the process. Alternate implementations are included within the scope of the example embodiments in which functions may be executed out of order from that shown or discussed, including substantially concurrently or in reverse order, depending on the functionality involved, as would be understood by those reasonably skilled in the art of the described embodiments.

Method 500 begins at block 510. At block 510, one or more images are captured of one or more mechanical components of a machine using a TMD. For example, if the machine were a motor vehicle, the mechanical components are any components of the motor vehicle, such as but not limited to engine parts, body components, wheels, tires, axles, transmissions/linkages, exhaust components, windows, gauges, indicators, lights, displays, radios, telephones, other communications/entertainment components, seats, moldings, and flooring. The TMD may be a computing device, such as computing device 400 that is equipped with an image-capture device suitable for capturing the images of the mechanical components.

At block 520, a query is transmitted that includes the one or more images of mechanical components. The TMD may generate the query, include the images and any additional information, before being transmitted. The query may be transmitted to a telemaintenance database and/or a telemaintenance center for processing. The query may be transmitted over one or more networks, such as the networks described with respect to network-communication interface 440 of Figure 4. The images may be of a format described above with respect to image-capture device 450 of Figure 4.

The query may include information beyond the one or more images, such as but not limited to query limitations, one or more repair operations, and/or mechanical-component information. Query limitations are discussed above with respect to Figure 1 and in more detail below with respect to block 610 of Figure 6. The repair operation may indicate what information is requested, such as a repair operation of "Look Up Part." Many other types of information may be included in the query as well.

The repair operation may specify an operation being performed on the machine. For example, if repair personnel are removing a spark plug, the query may specify "Removed Spark Plug" as a repair operation along with an image of the removed spark plug and/or the location in the machine where the spark plug was held.

Mechanical-component information may include but is not limited to manufacturer information, part numbers, replacement/substitute part information, dimensions (*e.g.,* sizes, weights, pressures, etc.), component-wear information (*e.g.,* new, almost new, OK, worn, etc.), other sensory information (*e.g.*, smells like burnt oil or feels rough).

Mechanical-component information may also or instead include inventory information. The inventory information may include number of parts on hand, numbers of parts on order, cost information, part location(s), and/or ordering information (*e.g.,* supplier names, addresses, e-mail, inventory-related Internet information such as web pages or uniform resource locators (URLs), information). The part locations may include supply vehicles or other mobile sources of parts. For example, one or more supply vehicles may travel with a convoy or other fleet of vehicles. The query may include limitation of inventory information to locations at or near the convoy, such as components located in the one or more supply vehicle and/or at nearby waypoints for the convoy. Many other types of mechanical-component information are possible as well.

Also the query may include repair personnel information (*e.g.*, name and/or identification number), time and date information, location information (*e.g.*, latitude/longitude or street address), addressing information (*e.g.*, IP or MAC address), query constraints such as size of response or query duration information, and many other types of information related to the query.

At block 530, a response to the query or "query response" may be received. The query response may be received by the TMD. The query response may include, but is not limited to, information such as advisory information, one or more images, video data, audio data, audiovisual data, binary data, request(s) for additional data, and/or error message information.

The query response may indicate that the query successfully or unsuccessfully located the one or more images and/or additional information in the telemaintenance database and/or a telemaintenance center, subject to any query limitations. For example, if an image search of the telemaintenance database may or may not return a found image based on an input or processed image. Further, the telemaintenance database may or may not send the found image as part of the query result, perhaps depending on query limitations indicating if images should or should not be in the query response.

If the query is successful, the query response may include the information requested in the query. For example, if a query limitation or other data in the query requested mechanical component information or repair operation(s), the query response may include mechanical-component information, such as a mechanical component number or ordering information or a next repair operation, respectively. The next repair operation may depend on a repair operation and/or other data specified in the query. For example, if the query specified "Spark Plug Removed" as a repair operation, the next repair operation may be "Inspect Removed Spark Plug." The query response may also include other information such as inventory information ("Spark Plug #64 - $1.38 at Jill's Auto Parts"), related images, references (*e.g.*, pages in a repair manual), hyperlinks, web pages, audio and/or text. Many other types of other information are possible as well.

If the query is unsuccessful, the query response may include an appropriate message. The appropriate message may include, but is not limited to, data such as one or more images, video data, audio data, audiovisual data, and/or binary data. The appropriate message may be an error message, a request for more data, and/or an advisory message. The requested data may be image(s) and/or sensor reading(s) of mechanical component(s) and/or the environment; however, many other types of requested data are possible as well. The advisory message may provide example image(s) of the mechanical component, information about installation of a mechanical component or use of a sensor. The advisory message may include audiovisual or other data, such as data representing manual pages, explaining respectively how to install the mechanical component or use the sensor. Many other types of advisory messages are possible as well.

At block 540, at least part of the response may be displayed, perhaps on the TMD.

At block 550, an operation is performed on the machine based on the response. The operation may include installing or removing components of the machine, locating mechanical components, equipment (*e.g.*, hammers, screwdrivers, wrenches) and/or additional material (*e.g.*, oils, solvents, fluids), inspecting the machine, testing the machine. Many other types of operations are possible as well.

At block 560, a determination is made as to whether another operation will be performed on the machine. For example, the operation may be an operation during a repair session. If another operation will be performed, method 500 may proceed to block 510. If another operation will not be performed, the method 500 may end.

### An Example Method for Responding to Queries

Figure 6 is a flowchart depicting another example method 600, in accordance with an embodiment of the disclosure. Method 600 begins at block 610, where a query is received that includes one or more input images of one or more mechanical components. The query may be as described above with respect to block 520 of method 500. The one or more input images may be as described above with respect to image-capture device 450 of Figure 4. The query may be received over one or more networks, such as described with respect to network-communication interface 440 of Figure 4.

The query may be received at a telemaintenance database. The telemaintenance database may include one or more telemaintenance records. Each telemaintenance record may include information about one or more mechanical components. The information in a telemaintenance record may include, but is not limited to, image(s) of the mechanical components and mechanical-component information as described above with respect to block 520 of Figure 5. The telemaintenance record may also include binary, textual, numerical, graphical, and/or video data about the component, such as example repair procedures performed with the component. Information in the telemaintenance database and/or telemaintenance records may be stored in one or more database file structures, including but not limited to flat files, relational database data structures including relational database tables, other types of tables (*e.g.* hash tables or lookup tables), linked lists, tries, tree structures, and/or any other database file structure now in use or to be invented operable to store part or all of the information in a telemaintenance database and/or telemaintenance records as described herein.

The query may be part of a repair session. During a repair session, one or more operations are performed on a machine, perhaps in a specified sequence. Repair operation information may be part of a query during a repair session. Then, during a repair session, a next repair operation may be determined based on the repair operation and the images in the query. For example, if the query specified "Spark Plug Removed" as a repair operation and included an image identified as a spark plug, the next repair operation may be "Inspect Removed Spark Plug." However, if the image were identified as another object (*e.g.*, a spark plug wrench, radiator, beverage container, or flamethrower), the next repair operation may be "Reattempt Spark Plug Removal" or, perhaps an "Image Not Found or Invalid - Resend" or similar indication that the image was invalid or not found and requesting retransmission of the image.

The query may be part of an interactive session. The interactive session may involve communication with one or more repair personnel attempting to perform operations on a machine and one or more advisory personnel. The advisory personnel may be located remotely from the machine (*e.g.*, at a telemaintenance center). Preferably, the advisory personnel are subject matter experts about the machine and/or performing the attempted operations on the machine.

The interactive session may involve audio, visual, audiovisual, and/or binary data, including but not limited to, images of part or all of the machine, advice about the operations to be performed (*e.g.*, "Try removing the brake shoe now." or "Don't get your head near the fan when you turn the engine over!"), audio and/or video data (*e.g.*, a narrated video clip showing how to install a spark plug), additional operations to be performed on the machine (*e.g.*, "Press the brakes and see if the brake lights are coming on now... "), sensory impressions about the machine (*e.g.*, how the machine sounds, looks, smells, and/or feels), readings from sensors concerning the machine, and/or readings from sensors concerning an environment around the machine (*e.g.*, readings from CBRN sensors, temperature readings, air quality readings, etc.). Data from sensors may be obtained via a sensor interface, such as sensor interface 470 described above with respect to Figure 4. The interactive session may be part of a repair session or vice versa.

For example, suppose a soldier or other person were traveling in a vehicle in a remote area, and the vehicle broke down. The soldier may establish an interactive session with advisory personnel at a telemaintenance center, at headquarters, or another location to help the soldier repair the vehicle. As another example, suppose a mechanic or other person was repairing of a machine during a repair session and could not perform a specific repair operation. The mechanic may establish an interactive session with remotely-located subject matter experts to help the mechanic perform the specific repair session. The mechanic may then close the interactive session or may keep the interactive session active throughout some or all of the repair session.

In this embodiment, telemaintenance record(s) in the telemaintenance database may have a "repair operation" and "next repair operation" information. As such, during a repair session, the query and/or image search may be restricted to telemaintenance records that both match the image and the indicated "repair operation" and then include the corresponding "next repair operation" information in the query result. Query processing during the repair session may determine an operation status of the repair operation, such as finding searching an image stored in the telemaintenance database during an image source associated with data that indicates the image is for the same repair operation and that the operation status was "correct" or "incorrect." Many other types of operation status are possible as well, such as but not limited to other textual statuses, numerical status, and/or letter grades (*e.g.*, A, B, C, D, F). The repair session may then be tracked based on the operation status. Other data included in the query and/or query content, such as but not limited to session ID, operation ID, timing, and/or addressing information (*e.g.*, IP or MAC addresses), may be used to track repair sessions as well.

A graphical processor may be used to process the input images. The graphical processor may be part of the telemaintenance database, part of the TMD, and/or a standalone hardware and/or software component. The graphical processor may perform one or more image-processing operations on the input images, perhaps before an image search is performed, to aid image searching at the telemaintenance database. Image-processing operations that may be performed by the graphical processor include image cropping, zooming in or out on the image(s), identifying features, smoothing and/or sharpening lines, altering the lighting, contrast, and/or colors, compressing or decompressing the image, increasing or decreasing image size(s), and/or merging images into a combined image. Many other image-processing operations are possible as well. After any image-processing operations are performed by the graphical processor, the processed images may replace (or be added to the query with) the one or more input images.

The query may include query limitations, such as the query limitation(s) described above with respect to Figure 1 to locate mechanical components within a short distance of a location of the machine 110. Many other query limitations, such as but not limited to, requests for specific information (*e.g.*, mechanical-component information, additional repair operations, ordering and/or cost information), query response size, types of data desired in the query response (*e.g.*, the desired query response should only include text and/or still images in response or the desired query response may include any type of data), query response time, mechanical component parameters (*e.g.*, cost, size, materials used in the mechanical component(s) or weight), and/or ordering limitations (*e.g.*, limit query responses to responses about mechanical components in stock with one or more preferred suppliers) are also possible.

Also or instead, the image search may be human assisted. For example, a person working at a telemaintenance center may identify a component shown in an input image (*e.g.*, a spark plug) and modify the query to include the component identification (*e.g.*, add data to the query indicating the image is of a (specifically identified) spark plug).

At block 620, a query result may be determined based on the one or more input images. The query result may include a result of an image search performed on images stored in telemaintenance records stored in a telemaintenance database, an operation status of a repair operation discussed above in more detail with respect to block 610, and/or may include information retrieved from the telemaintenance records in the telemaintenance database. The query result may be limited, such as but not limited to the query limitations discussed above with respect to block 520 of method 500. The image search may use the input and/or processed image(s) as an input and return the query result. The query result may include some, all, or more information included in a query response described above in more detail with respect to block 530 of method 500.

At block 630, a response may be sent based on the query result. In particular, the response may comprise a query response described above in more detail with respect to block 530 of Figure 5. The response may include additional information about the response as well, such as addressing information about the source address (*e.g.*, a computer hosting the telemaintenance database) and/or the destination address (*e.g.*, the TMD) for the response, time and date information, size information, and/or additional networking information/overhead. The response may be sent via a network as described above with respect to the network-communication interface 440 of Figure 4. After completing the procedures of block 630, method 600 may end.

At block 640, a determination is made whether additional queries are to be made. For example, advisory personnel during a repair session may ask for additional queries or alternately indicate the interactive session is complete. As another example, the determination may involve determining if a set of operations performed on a machine during a repair session may or may not be complete.

Many of the elements described herein are functional entities that may be implemented as discrete or distributed components or in conjunction with other components, in any suitable combination and location, and as any suitable combination of hardware, firmware, and/or software.

## Claims

1. A device comprising:
an image-capture device;
a processor;
data storage; and
machine language instructions stored in the data storage and executable by the processor to perform functions comprising:
capturing at least one image of one or more mechanical components using the image-capture device,
sending a query comprising the at least one image and a repair operation,
receiving a response to the query, and
displaying at least part of the response.

2. The device of claim 1, wherein the response comprises a next repair operation.

3. The device of claim 1, wherein the image-capture device comprises a display, wherein displaying the at least part of the response comprises displaying an imaged-repair record comprising the at least part of the response.

4. The device of claim 3, wherein the functions further include storing the response, and wherein the imaged-repair record comprises at least part of one or more stored responses.

5. The device of claim 1, wherein the response to the query comprises location information concerning a mechanical component.

6. The device of claim 1, wherein the response comprises at least one image.

7. A method comprising:
capturing at least one image of one or more mechanical components of a vehicle using a telemaintenance device (TMD);
transmitting a query comprising the at least one image and a repair operation;
receiving a response to the query; and
displaying at least part of the response by the TMD.

8. The method of claim 7, further comprising performing a repair of the vehicle based on the response.

9. The method of claim 7, wherein transmitting the query comprises:
transmitting the query comprising the at least one image to a telemaintenance database; and
at the telemaintenance database, performing an image search of the at least one image, wherein the response to the query comprises a query result of the image search.

10. A method comprising:
at a telemaintenance database, receiving a query including one or more input images of mechanical components;
determining a query result based on the one or more input images in the query; and
sending a response based on the query result.
